# EUROPÄISCHE PATENTSCHRIFT

(11) **EP 0 710 260 B1**
(45) Veröffentlichungstag und Bekanntmachung des Hinweises auf die Patenterteilung: **05.03.1997**
(21) Anmeldenummer: 94921651.9
(22) Anmeldetag: 16.07.1994
(51) Int. Cl.: C08G 67/02

(54) **VERFAHREN ZUR HERSTELLUNG VON POLYKETONEN**
PROCESS FOR PREPARING POLYKETONES
PROCEDE DE PREPARATION DE POLYCETONES

(30) Priorität: 23.07.1993 DE 4324773
(43) Veröffentlichungstag der Anmeldung: 08.05.1996
(73) Patentinhaber: BASF AKTIENGESELLSCHAFT, 67056 Ludwigshafen (DE)
(72) Erfinder: LIPPERT, Ferdinand, D-67098 Bad Dürkheim (DE); HÖHN, Arthur, D-67063 Ludwigshafen (DE); HOFMANN, Peter, D-90475 Nürnberg (DE)
(86) Internationale Anmeldenummer: EP9402341
(87) Internationale Veröffentlichungsnummer: WO9503353

(56) Entgegenhaltungen:
- EP-A- 0 522 635
- EP-A- 0 522 643

## Beschreibung

Die vorliegende Erfindung betrifft für die Herstellung von Polyketonen geeignete Katalysatorsysteme aus
a) einer Verbindung eines Metalls der 8. Nebengruppe des Periodensystems,
b) einer Protonensäure und/oder einer Lewissäure und
c) einem Bisphosphin der allgemeinen Formel I 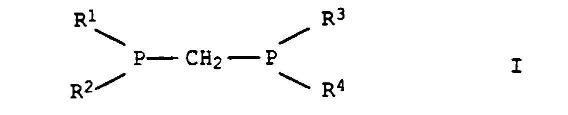 in der R¹ und R³ für cycloaliphatische oder verzweigte aliphatische Reste stehen und R² und R⁴ ebenfalls derartige Reste oder unverzweigte aliphatische Reste bedeuten, wobei die C-Atome in den Resten R¹-R⁴ auch durch Heteroatome ersetzt sein können.

Außerdem betrifft die Erfindung ein Verfahren zur Herstellung von Polyketonen unter Verwendung dieser Katalysatorsysteme.

Polyketone, die alternierend aus dem Strukturelement eines Olefins und Kohlenmonoxid aufgebaut sind, sind z.B. aus dem Journal of Organometallic Chemistry, 417(1991)235, dem PEP Review No. 91-2-2 sowie Adv. Polym. Sci., 73/74(1986)125ff bekannt. Zur Herstellung dieser Polymerisate werden Verfahren vorgeschlagen, bei denen Kohlenmonoxid und Olefine in Gegenwart eines Katalysatorsystems bestehend aus a) einem Palladiumsalz, insbesondere Palladiumacetat, b) zweizähnigen verbrückten Phosphinliganden wie Bis(diphenylphosphino)alkanen und c) Säureanionen, die mit dem Palladiumion und dem Phosphinliganden keine Komplexe bilden, copolymerisiert werden.

In der EP-A 501 576 wird die Copolymerisation von Olefinen und Kohlenmonoxid mit Katalysatoren, die eine Verbindung eines Metalls der 8. Gruppe des Periodensystems, eine Mischung aus einer Protonen- und einer Lewissäure und eine zweizähnige Bisphosphinopropan-Verbindung wie 1,3-Bis[bis(2-methoxyphenyl)phosphino]-propan enthalten, empfohlen. Dieses Katalysatorsystem ist besonders vorteilhaft in der Gasphasenpolymerisation einsetzbar.

Die EP-A 516 238 betrifft ein Verfahren zur Herstellung von Polyketonen, bei dem das Katalysatorsystem neben Palladiumsalzen und Säureanionen Bis(dialkylphosphino)alkane enthält, wobei die die Phosphoratome verbrückende Alkylkette aus 2 bis 4 Kohlenstoffatomen besteht. Besonders vorteilhaft lassen sich mit diesen Katalysatoren Polyketone, die aus einem Cyclopenten aufgebaut sind, herstellen. Im Gegensatz hierzu liefern die bekannten Katalysatorsysteme mit Bisphosphinomethan-Liganden keine zufriedenstellenden Polymerisationsergebnisse.

Aus der DE-A 4 134 772 ist ein Verfahren zur Herstellung von Bis(di-tert.-butylphosphino)methan bekannt. Komplexe aus diesem Liganden mit verschiedenen Metallen der 8. Nebengruppe des Periodensystems werden als Katalysatoren für Hydrierungen, Hydroformylierungen, Carbonylierungen sowie für die Oligomerisation ungesättigter Verbindungen vorgeschlagen.

Die EP-A 495 547 betrifft die Monocarbonylierung von Olefinen mittels Kohlenmonoxid, wobei der Katalysator neben Kationen der 8. Nebengruppe und Säureanionen auch eine Verbindung der Formel R¹R²P-X-PR³R⁴ enthält. Als geeignete Reste R¹ bis R4 werden u.a. tert-Butylgruppen und als eine für die Verbrückung beider Phosphoratome geeignete Gruppe neben anderen auch die Methylengruppe genannt.

Der vorliegenden Erfindung lagen Katalysatorsysteme für die Herstellung von Polyketonen als Aufgabe zugrunde, die wirkungsvoller als die hierfür bisher bekannten Systeme sind.

Demgemäß wurden die eingangs definierten Katalysatorsysteme gefunden.

Außerdem wurde ein Verfahren zur Herstellung von Polyketonen unter Verwendung dieser Katalysatorsysteme gefunden.

Als Metalle in der Komponente (a) eignen sich neben Eisen, Cobalt und Nickel vornehmlich die Platinmetalle wie Ruthenium, Rhodium, Osmium, Iridium und Platin sowie ganz besonders Palladium.

Man setzt diese Metalle vorzugsweise in Form ihrer Salze, darunter besonders der carbonsauren Salze wie der Acetate ein.

Ganz besonders bevorzugt ist das Palladiumacetat. Weiterhin eignen sich Komplexverbindungen, beispielsweise die Acetylacetonate.

Als Katalysatorbestandteile b) kommen Lewis- und Protonensäuren und deren Mischungen in Betracht.

Bevorzugte Protonensäuren (b) sind starke Mineralsäuren wie Schwefelsäure, Fluorwasserstoffsäure und Perchlorsäure sowie unter den organischen Säuren besonders bevorzugt Sulfonsäuren wie Methansulfonsäure, p-Toluolsulfonsäure und Benzolsulfonsäure sowie Trichlor- und Trifluoressigsäure und Brenzkatechinatoborsäure. Weiterhin sind die sauer wirkenden Salze starker Säuren mit schwachen Basen geeignet. Säuren mit Anionen, welche leicht Komplexe mit dem Zentralatom, beispielsweise dem Palladium, eingehen, wie Halogenanionen, sind weniger gut geeignet.

Beispiele für Lewissäuren sind Aluminiumtrichlorid, Titantetrachlorid, Aluminiumtrifluorid, Bortrifluorid und Antimonpentafluorid.

Im übrigen eignen sich als Katalysatorkomponenten (a) und (b) diejenigen, wie sie allgemein für Systeme mit Bisphosphinen aus den EP-A 501 576 und 516 238 bekannt sind.

Besonders charakteristisch für die erfindungsgemäßen Katalysatorsysteme sind die Bisphosphine I, deren gute Eignung für die Herstellung von Polyketonen einerseits auf der Methylenverknüpfung der beiden Phosphoratome und andererseits auf der sterischen Form der Reste R¹ und R³ beruht. Diese Reste, und vorzugsweise auch die Reste R² und R⁴ sollen soweit raumerfüllend sein, daß das Zentralatom, z.B. das Palladiumatom, mit dem die P-Atome den aktiven Komplex bilden, weithin abgeschirmt wird. Reste, welche dieser Forderung genügen, sind cycloaliphatische Reste sowie verzweigte aliphatische Reste, darunter besonders solche mit Verzweigung in α-Position.

Als cycloaliphatische Reste kommen die Cyclopentyl- und Cyclohexylgruppen sowie besonders bicyclische Reste wie die Pinanyl-und die Bornylgruppe, letztere in beliebiger Verknüpfung des Ringgerüstes mit dem P-Atom, in Betracht. Vorzugsweise enthalten die cycloaliphatischen Reste insgesamt 5 bis 20 C-Atome.

Als verzweigte aliphatische Reste eignen sich C₃-C₂₀ vorzugsweise C₃-C₁₂-Alkyl- und Alkenylreste, darunter vor allem die tert.-Butylgruppe und auch die Isopropylgruppe sowie die sec.-Butylgruppe. Auch Alkylgruppen mit weiter außen liegender Verzweigungsstelle kommen in Betracht, z.B. die Isobutylgruppe, die 3-Methyl-but-2-ylgruppe und 4-Methylpentylgruppe.

Die Reste R² und R⁴ brauchen nicht unbedingt sterisch raumerfüllende Gruppen zu sein, d.h. hier kommen auch lineare Alkyl-und Alkenylgruppen mit 1 bis 20 C-Atomen in Betracht, beispielsweise die Methyl-, Ethyl- und Hexylgruppe.

Auf die chemische Natur der Reste R¹ bis R⁴ kommt es nach den bisherigen Beobachtungen nicht entscheidend an, d.h. die Reste können auch Substituenten wie Halogen, Hydroxy, Alkoxy, Phenyl und Cyan tragen, die sich unter den Polymerisationsbedingungen inert verhalten.

Weiterhin ist es möglich, daß die C-Atome der Reste R¹ bis R⁴ zum Teil durch Heteroatome wie Sauerstoff, Schwefel und Stickstoff sowie durch Silizium ersetzt sind. Bevorzugte Gruppen dieser Art sind die Trimethylsilyl- und die Bis(trimethylsilyl)methylgruppe. Hat mindestens einer der Reste R¹ bis R⁴ ein chirales Zentrum, beispielsweise wie in der (+)-Pinan-3-ylgruppe, lassen sich hiermit stereoselektive Polymerisationen vornehmen.

Das Verhältnis der Katalysatorbestandteile zueinander wird im allgemeinen so gewählt, daß
- das molare Verhältnis der Metallverbindung (a) zur Säure (b) 0,01 : 1 bis 10 : 1, bevorzugt 0,1 : 1 bis 1 : 1 und
- das molare Verhältnis der Metallverbindung (a) zum Phosphorliganden (c) 0,01 : 1 bis 10 : 1, bevorzugt 0,1 : 1 bis 2 : 1 beträgt.

Das Katalysatorsystem ist für die Herstellung von Polyketonen aus Kohlenmonoxid und olefinisch ungesättigten Verbindungen geeignet, in denen diese Monomeren überwiegend alternierend in das Polymere eingebaut werden.

Als olefinisch ungesättigte Verbindung kommen grundsätzlich alle Monomere dieser Verbindungsklasse in Betracht.

Bevorzugt sind Ethylen und C₃-C₁₀-Alk-1-ene wie hauptsächlich Propylen; Butadien, sowie daneben Cycloolefine wie Cyclopenten, Cyclohexen, Norbornen und Norbornadiene.

Unter den aromatischen Monomeren seien in erster Linie Styrol und α-Methyl-styrol genannt.

Besondere Bedeutung haben ferner Acrylsäure und Methacrylsäure sowie deren Derivate, darunter insbesondere die Nitrile, die Amide und die C₁-C₆-Alkylester.

Weitere geeignete Monomere sind Vinylchlorid, Vinylacetat, Vinylpropionat, Maleinsäureanhydrid und N-Vinylpyrrolidon. Selbstverständlich können auch Mischungen verschiedener Monomerer eingesetzt werden.

Das molare Verhältnis der olefinisch ungesättigten Verbindung zum Kohlenmonoxid kann weitgehend frei gewählt werden und beträgt vorzugsweise zwischen 0,1 : 1 bis 10 : 1, bevorzugt in der Nähe von 1 : 1.

Die Menge des Katalysatorsystems ist an sich unkritisch und beträgt im allgemeinen 0,0001 bis 1 Gew.-%, vorzugsweise 0,001 bis 0,5 Gew.-% des Metalls der Komponente (a), bezogen auf die Menge der eingesetzten olefinisch ungesättigten Verbindung.

Die Polymerisationsbedingungen sind an sich unkritisch. Drücke von 1 bis 3500 bar, vorzugsweise 2 bis 1500 bar und insbesondere 5 bis 100 bar, Temperaturen von (-50) bis 400°C, bevorzugt 20 bis 250°C und insbesondere 40 bis 100°C haben sich als geeignet erwiesen.

Polymerisationsreaktionen mit Hilfe der erfindungsgemäßen Katalysatorsysteme lassen sich in der Gasphase, in Suspension, in flüssigen und in überkritischen Monomeren und in inerten Lösungsmitteln durchführen.

Geeignete inerte Lösungsmittel sind Sulfoxide und Sulfone, beispielsweise Dimethylsulfoxid, Ester wie Essigester und Butyrolacton, Ether wie Tetrahydrofuran, Dimethylethylenglycol und Diisopropylether sowie aromatische Lösungsmittel wie Benzol, Toluol oder Chlorbenzol. Als Regler kommen Alkohole wie tert.-Butylalkohol, Ethanol und bevorzugt Methanol, in Betracht.

Wird die Polymerisation in der Gasphase oder in Suspension durchgeführt, so wird das Katalysatorsystem im allgemeinen auf eine Trägersubstanz wie Al₂O₃ oder SiO₂ aufgebracht.

Die unter Verwendung der erfindungsgemäßen Katalysatoren hergestellten Polyketone sind weiß, hochschmelzend und haben einen hohen kristallinen Anteil. Ihre Molekulargewichte liegen je nach Wahl der Polymerisationsbedingungen bei 1000 bis 100 000. Sie lassen sich leicht durch polymeranaloge Umsetzung modifizieren.

Die Polyketone eignen sich zur Herstellung von Formkörpern, insbesondere von Hohlkörpern für Verpackungen und Automobilaußenteilen sowie von Folien.

### Beispiele

In einem 0,3 l-Autoklaven wurden Methanol, Palladiumacetat, Bis(di-tert.-butylphosphino)methan und p-Toluolsulfonsäure vorgelegt. Danach wurde bei der gewählten Reaktionstemperatur ein Gemisch aus Ethylen und Kohlenmonoxid im Molverhältnis 1:1 zu einem Gesamtdruck von 60 bar aufgepreßt. Temperatur und Partialdrücke der Monomeren wurden während der gesamten Reaktionsdauer konstant gehalten, wonach die Polymerisation durch Entspannen des Autoklaven abgebrochen und das Lösungsmittel abfiltriert wurde.

Die Verfahrensparameter, eingesetzte Mengen an Katalysator und Lösungsmittel sowie die erhaltenen Mengen an Copolymerisat und sein Schmelzpunkt sind der Tabelle zu entnehmen.

| | Beispiel | | | |
|---|---|---|---|---|
| | 1 | 2 | 3 | 4 |
| Methanol [g] | 50 | 100 | 100 | 100 |
| Palladiumacetat [mg] | 49 | 49 | 49 | 16 |
| Bisphosphin [mg] | 270 | 270 | 270 | 60 |
| p-Toluolsulfonsäure [mg] | 140 | 140 | 140 | 70 |
| Reaktionstemperatur [°C] | 110 | 85 | 85 | 85 |
| Reaktionszeit [h] | 3 | 10 | 3 | 10 |
| Polyketon [g] | 39 | 40 | 43 | 18 |
| Schmelzpunkt [°C] | 226 | 238 | 237 | 238 |

## Patentansprüche

1. Für die Herstellung von Polyketonen geeignete Katalysatorsysteme aus
a) einer Verbindung eines Metalls der 8. Nebengruppe des Periodensystems,
b) einer Protonensäure und/oder einer Lewissäure und
c) einem Bisphosphin der allgemeinen Formel I 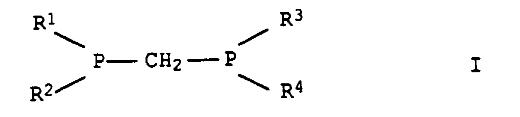 in der R¹ und R³ für cycloaliphatische oder verzweigte aliphatische Reste stehen und R² und R⁴ ebenfalls derartige Reste oder unverzweigte aliphatische Reste bedeuten, wobei die C-Atome in den Resten R¹-R⁴ auch durch Heteroatome ersetzt sein können.

2. Katalysatorsysteme nach Anspruch 1, in denen die Komponente (a) eine Palladiumverbindung ist.

3. Katalysatorsysteme nach Anspruch 1 oder 2, in der die Komponente (b) eine Säure mit schwach koordinierendem Anion ist.

4. Katalysatorsysteme nach den Ansprüchen 1 bis 3, in denen die Komponente (c) das Bis(di-tert.-butylphosphino)methan ist.

5. Verfahren zur Herstellung von Polyketonen aus einem oder mehreren olefinisch ungesättigten Verbindungen und Kohlenmonoxid durch Polymerisation dieser Monomeren mit Hilfe eines Katalysatorsystems aus
a) einer Verbindung eines Metalles der 8. Nebengruppe des Periodensystems,
b) einer Protonensäure und/oder einer Lewissäure und
c) einem Bisphosphin
dadurch gekennzeichnet, daß man als Komponente (c) ein Bisphosphin der allgemeinen Formel gemäß Anspruch 1 verwendet.

6. Verfahren nach Anspruch 5, dadurch gekennzeichnet, daß man als olefinisch ungesättigte Verbindung Ethylen einsetzt.

7. Verfahren nach Anspruch 5, dadurch gekennzeichnet, daß man als olefinisch ungesättigte Verbindung Acrylsäure, Methacrylsäure, C₁-C₆-Alkylester dieser Säuren oder Gemische dieser Monomeren einsetzt.

## Claims

1. A catalyst system which is suitable for the preparation of polyketones and comprises
a) a compound of a metal of subgroup 8 of the Periodic Table,
b) a protic acid and/or a Lewis acid and
c) a bisphosphine of the formula I 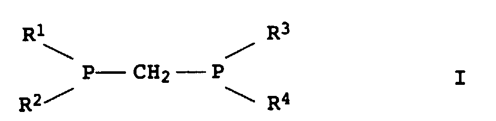 where R¹ and R³ are each a cycloaliphatic or branched aliphatic radical and R² and R⁴ are each likewise a radical of this type or a straight-chain aliphatic radical, and the carbon atoms in R¹ to R⁴ may furthermore be replaced by heteroatoms.

2. A catalyst system as claimed in claim 1, in which component (a) is a palladium compound.

3. A catalyst system as claimed in claim 1 or 2, in which component (b) is an acid having an anion which forms a weak coordinate bond.

4. A catalyst system as claimed in any of claims 1 to 3, in which component (c) is bis(di-tert-butylphosphino)methane.

5. A process for the preparation of polyketones from one or more olefinically unsaturated compounds and carbon monoxide by polymerization of these monomers with the aid of a catalyst system comprising
a) a compound of a metal of subgroup 8 of the Periodic Table,
b) a protic acid and/or a Lewis acid and
c) a bisphosphine,
wherein component (c) used is a bisphosphine of the formula as claimed in claim 1.

6. A process as claimed in claim 5, wherein the olefinically unsaturated compound used is ethylene.

7. A process as claimed in claim 5, wherein the olefinically unsaturated compound used is acrylic acid, methacrylic acid, a C₁-C₆-alkyl ester of one of these acids or a mixture of these monomers.

## Revendications

1. Systèmes de catalyseurs appropriés pour la préparation de polycétones, constitués par
a) un composé d'un métal du 8ème sous-groupe du système périodique,
b) un acide protonique et/ou un acide de Lewis, et
c) une biphosphine répondant à la formule générale I 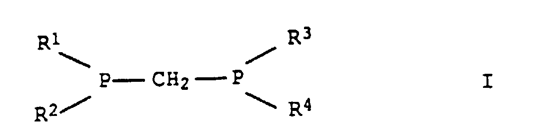 dans laquelle R¹ et R³ représentent des radicaux cycloaliphatiques ou aliphatiques ramifiés, et R² et R⁴ représentent également des radicaux de ce type ou bien des radicaux aliphatiques non ramifiés, les atomes de carbone dans les radicaux R¹-R⁴ pouvant également être remplacés par des hétéro-atomes.

2. Systèmes de catalyseurs selon la revendication 1, dans lesquels le composant (a) est un composé de palladium.

3. Systèmes de catalyseurs selon la revendication 1 ou 2, dans lesquels le composant (b) est un acide contenant un anion dont l'effet de coordination est peu marqué.

4. Systèmes de catalyseurs selon les revendications 1 à 3, dans lesquels le composant (c) est le bis(di-tert.-butylphosphino)méthane.

5. Procédé pour la préparation de polycétones à partir d'un ou de plusieurs composés à insaturation oléfinique et du monoxyde de carbone, par polymérisation de ces monomères à l'aide d'un système de catalyseur constitué par
a) un composé d'un métal du 8ème sous-groupe du système périodique,
b) un acide protonique et/ou un acide de Lewis et
c) une biphosphine
caractérisé en ce qu'on utilise comme composant (c) une biphosphine répondant à la formule générale selon la revendication 1.

6. Procédé selon la revendication 5, caractérisé en ce que, comme composé à insaturation oléfinique, on met en oeuvre de l'éthylène.

7. Procédé selon la revendication 5, caractérisé en ce que, comme composé à insaturation oléfinique, on met en oeuvre l'acide acrylique, l'acide méthacrylique, des esters alkyliques en C₁ -C₆ de ces acides ou encore des mélanges de ces monomères.
